# EUROPEAN PATENT APPLICATION

(11) **EP 4 640 759 A1**
(43) Date of publication of application: **29.10.2025**
(21) Application number: 23906913.1
(22) Date of filing: 15.12.2023
(51) Int. Cl.: C08L 33/04, B32B 27/30, C08L 25/08

(54) **RESIN COMPOSITION, PLATE-SHAPED MOLDED OBJECT, MULTILAYER OBJECT, AND MOLDED ARTICLE**

(30) Priority: 20.12.2022 JP 2022203145
(71) Applicant: MITSUBISHI GAS CHEMICAL COMPANY, INC., Chiyoda-ku Tokyo 100-8324 (JP)
(72) Inventor: SAKURAI, Kaori, Tokyo 100-8324 (JP); YAMAGUCHI, Madoka, Tokyo 125-8601 (JP)
(74) Representative: Hoffmann Eitle
(86) International application number: PCT/JP2023/044984
(87) International publication number: WO 2024/135551

(57) **Abstract**

A resin composition containing 30 to 85 parts by mass of an acrylic resin (A) and 15 to 70 parts by mass of an aromatic vinyl resin (B), wherein the acrylic resin A contains 60 to 95% by mass of (meth)acrylic monomer units and 5 to 40% by mass in total of at least one selected from the group consisting of glutaric anhydride units, glutarimide units, N-substituted maleimide units, and lactone ring units, and the aromatic vinyl resin (B) contains 55 to 93% by mass of aromatic vinyl monomer units and 7 to 45% by mass of N-substituted maleimide units. A plate-shaped molded article and a multilayered article are provided.

## Description

### [Technical Field]

The present invention relates to a resin composition, a plate-shaped molded article, a multilayered article, and a formed article.

### [Background Art]

Since acrylic resins have excellent transparency and formability and are excellent in surface hardness, they are used for many purposes as optical materials. In contrast, the acrylic resins are inferior in material toughness, so that production of multilayered articles such as multilayer films/sheets has been carried out through coextrusion with a polycarbonate resin having excellent transparency and material toughness.

For example, Patent Literature 1 discloses a resin composition containing (meth)acrylic monomer units and aromatic vinyl monomer units, wherein the total of the (meth)acrylic monomer units and the aromatic vinyl monomer units in the resin composition is 55% by mass or more; the initial glass transition temperature (Tig) of the resin composition, as measured by differential scanning calorimetry, is 135°C or higher; the Charpy unnotched impact strength of the resin composition when the resin composition is molded into an ISO test piece having a thickness of 3 mm is 100 kJ/m2 or more, the Charpy unnotched impact strength being a value measured in the same manner as in JIS K 7111-1 except for changing the thickness of the ISO test piece to 3 mm from 4 mm; and the melt viscosity of the resin composition at a shear rate of 1220 sec⁻¹ and at 240°C is 500 Pa·s or less.

### [Citation List]

### [Patent Literature]

[Patent Literature 1]
International Publication No. WO2022/131014

### [Summary of Invention]

### [Technical Problem]

The aforementioned resin composition, and a plate-shaped molded article and a multilayered article using the resin composition are excellent, but depending on the purpose, demands for further performance are required. As one of them, required in some cases is suppression of cracking caused by hot bending in a short time while maintaining transparency.

The present invention is intended to solve such problems, and it is an object of the present invention to provide a resin composition capable of being inhibited from cracking caused by hot bending in a short time while maintaining transparency, and a plate-shaped molded article and a multilayered article using the resin composition.

### [Solution to Problem]

Based on the above problems, the present inventors have studied, and as a result, found that by blending a prescribed acrylic resin (A) with a prescribed aromatic vinyl resin (B) at a prescribed ratio, the above problems can be solved.

Specifically, the above problems have been solved by the following means.
<1> A resin composition comprising 30 to 85 parts by mass of an acrylic resin (A) and 15 to 70 parts by mass of an aromatic vinyl resin (B), wherein
   the acrylic resin (A) comprises 60 to 95% by mass of (meth)acrylic monomer units and 5 to 40% by mass in total of at least one selected from the group consisting of glutaric anhydride units, glutarimide units, N-substituted maleimide units, and lactone ring units, and
   the aromatic vinyl resin (B) comprises 55 to 93% by mass of aromatic vinyl monomer units and 7 to 45% by mass of N-substituted maleimide units.
<2> The resin composition according to <1>, wherein the acrylic resin (A) comprises 5 to 40% by mass of N-substituted maleimide units.
<3> The resin composition according to <1> or <2>, wherein the resin composition when molded to have a thickness of 3 mm has a haze of 5.0% or less.
<4> The resin composition according to any one of <1> to <3>, wherein the glass transition temperature of the resin composition is 135 to 165°C.
<5> The resin composition according to any one of <1> to <4>, wherein the aromatic vinyl resin (B) comprises 55 to 81% by mass of aromatic vinyl monomer units, 9 to 35% by mass of N-substituted maleimide units, and 10 to 36% by mass of cyclic acid anhydride units.
<6> The resin composition according to any one of <1> to <4>, wherein the aromatic vinyl resin (B) comprises 55 to 81% by mass of styrene units, 9 to 35% by mass of N-substituted phenylmaleimide units, and 10 to 36% by mass of maleic anhydride units.
<7> The resin composition according to any one of <1> to <6>, wherein the glass transition temperature of the aromatic vinyl resin (B) is 150 to 200°C.
<8> The resin composition according to any one of <1> to <7>, further comprising 0.001 to 0.5 part by mass of an antioxidant and/or a mold release agent based on 100 parts by mass of the resin composition.
<9> The resin composition according to any one of <1> to <8>, wherein the resin composition when molded to have a thickness of 1 mm has a pencil hardness, as measured in accordance with JIS K5600-5-4:1999, of F or higher.
<10> The resin composition according to <1>, wherein
   the acrylic resin (A) comprises 5 to 40% by mass of N-substituted maleimide units,
   the resin composition when molded to have a thickness of 3 mm has a haze of 5.0% or less,
   the glass transition temperature of the resin composition is 135 to 165°C,
   the aromatic vinyl resin (B) comprises 55 to 81% by mass of styrene units, 9 to 35% by mass of N-substituted phenylmaleimide units, and 10 to 36% by mass of maleic anhydride units,
   the glass transition temperature of the aromatic vinyl resin (B) is 150 to 200°C,
   the resin composition further comprises 0.001 to 0.5 part by mass of an antioxidant and/or a mold release agent based on 100 parts by mass of the resin composition, and
   the resin composition when molded to have a thickness of 1 mm has a pencil hardness, as measured in accordance with JIS K5600-5-4:1999, of F or higher.
<11> A plate-shaped molded article formed from the resin composition according to any one of <1> to <10>.
<12> The plate-shaped molded article according to <11>, for displays.
<13> A multilayered article comprising the plate-shaped molded article according to <11> or <12> and at least one other layer.
<14> The multilayered article according to <13>, wherein the at least one other layer is a layer comprising a polycarbonate resin.
<15> The multilayered article according to <13> or <14>, further having a hard coat layer.
<16> The multilayered article according to any one of <13> to <15>, wherein one or both surfaces of the multilayered article have been subjected to one or more of anti-fingerprint treatment, anti-reflection treatment, anti-glare treatment, weather resistant treatment, antistatic treatment, anti-fouling treatment, and anti-blocking treatment.
<17> A formed article comprising the plate-shaped molded article according to <11> or <12>.

### [Advantageous Effects of Invention]

The present invention has made it possible to provide a resin composition capable of being inhibited from cracking caused by hot bending in a short time while maintaining transparency, and a plate-shaped molded article and a multilayered article using the resin composition.

### [Brief Description of Drawing]

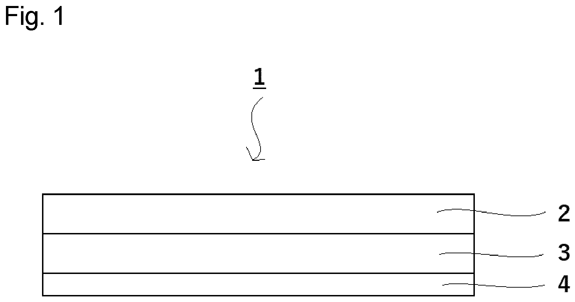

[Figure 1] Figure 1 is a diagram schematically showing layer constitution of the multilayered article of the present invention.

### [Description of Embodiments]

Hereinafter, the mode for carrying out the present invention (referred to as the "present embodiment" simply hereinafter) will be described in detail. The present embodiment below is an example for describing the present invention, and the present invention is not limited to the present embodiment only.

In the present specification, "~" is used to mean that the numeral values described before and after that are included as the lower limit and the upper limit.

In the present specification, various physical property values and characteristic values are those at 23°C unless otherwise noted.

Regarding the expression of a group (atomic group) in the present specification, an expression without the term substituted or unsubstituted includes not only a group (atomic group) having no substituent but also a group (atomic group) having a substituent. For example, an "alkyl group" includes not only an alkyl group having no substituent (unsubstituted alkyl group) but also an alkyl group having a substituent (substituted alkyl group). In the present specification, the expression with neither the term substituted nor the term unsubstituted is preferably an unsubstituted one.

In the present specification, "(meth)acrylic" represents both of acrylic and methacrylic, or any of them. An acrylic resin is intended to include not only a polymer of acrylates but also a polymer of methacrylates, a copolymer of a monomer and a (meth)acrylate, and the like.

The plate-shaped molded article and the multilayered article in the present specification are each intended to include an article in the form of a film or a sheet. The "film" and the "sheet" each refer to a formed article that has a small thickness as compared with the length and the width and is almost flat. The "film" and the "sheet" in the present specification may be each single-layered or multilayered.

When measurement methods, etc. described by the standards stated in the present specification vary depending on the year, they are based on the standards as of January 1, 2022, unless otherwise noted.

Figure 1 is a schematic diagram, and the reduction scale, etc. may not be consistent with reality.

The resin composition of the present embodiment is characterized in that it comprises 30 to 85 parts by mass of an acrylic resin (A) and 15 to 70 parts by mass of an aromatic vinyl resin (B), the acrylic resin A comprises 60 to 95% by mass of (meth)acrylic monomer units and 5 to 40% by mass in total of at least one selected from the group consisting of glutaric anhydride units, glutarimide units, N-substituted maleimide units, and lactone ring units, and the aromatic vinyl resin (B) comprises 55 to 93% by mass of aromatic vinyl monomer units and 7 to 45% by mass of N-substituted maleimide units. By taking such constitution, a resin composition capable of being inhibited from cracking caused by hot bending in a short time while maintaining transparency is obtained.

The reason is based on the capability of the resin composition to undergo hot bending under the higher temperature conditions because the resin composition has a high glass transition temperature equivalent to that of polycarbonate.

### <Acrylic resin (A)>

The acrylic resin (A) to be used in the present embodiment contains 60 to 95% by mass of (meth)acrylic monomer units and 5 to 40% by mass in total of at least one selected from the group consisting of glutaric anhydride units, glutarimide units, **N-**substituted maleimide units, and lactone ring units. Since the acrylic resin (A) is contained, a resin composition having improved compatibility with the aromatic vinyl resin (B) and excellent transparency is obtained as compared with a case where polymethyl methacrylate (PMMA) that is a general-purpose acrylic resin is used.

In the present embodiment, the acrylic resin (A) preferably contains N-substituted maleimide units at a ratio of 5 to 40% by mass.

The proportion of the (meth)acrylic monomer units in the acrylic resin (A) is preferably 62% by mass or more, more preferably 64% by mass of more, much more preferably 66% by mass or more, even more preferably 68% by mass or more, still more preferably 70% by mass or more. By setting the proportion to the above lower limit or more, the pencil hardness tends to be improved. The proportion of the (meth)acrylic monomer units in the acrylic resin (A) is preferably 90% by mass or less, more preferably 88% by mass or less, much more preferably 86% by mass or less, even more preferably 84% by mass or less, still more preferably 82% by mass or less, still much more preferably 80% by mass or less, further still more preferably 78% by mass or less, or may be 76% by mass or less, 74% by mass or less, or 72% by mass or less. By setting the proportion to the above upper limit or less, the heat resistance tends to be improved.

The proportion of the total of at least one selected from the group consisting of glutaric anhydride units, glutarimide units, N-substituted maleimide units, and lactone ring units (preferably the proportion of N-substituted maleimide units) in the acrylic resin (A) is preferably 10% by mass or more, more preferably 12% by mass or more, much more preferably 14% by mass or more, even more preferably 16% by mass or more, still more preferably 18% by mass or more, still much more preferably 20% by mass or more, further still more preferably 22% by mass or more. The proportion of the total of at least one selected from the group consisting of glutaric anhydride units, glutarimide units, **N-**substituted maleimide units, and lactone ring units (preferably the proportion of glutarimide units and/or N-substituted maleimide units, more preferably the proportion of N-substituted maleimide units) in the acrylic resin (A) is preferably 38% by mass or less, more preferably 36% by mass or less, much more preferably 34% by mass or less, even more preferably 32% by mass or less, still more preferably 30% by mass or less, still much more preferably 28% by mass or less, or may be 25% by mass or less.

The acrylic resin (A) may further contain constitutional units other than the above. Examples of monomer units other than the above include aromatic vinyl monomer units. Details of the aromatic vinyl monomer units are the same as those of aromatic vinyl monomer units described in the section of the aromatic vinyl resin (B) described later, and the preferred range of them is the same. When the acrylic resin (A) contains other monomer units (preferably aromatic vinyl monomer units), the content thereof is preferably 1% by mass or more, more preferably 3% by mass or more, and is preferably 12% by mass or less, more preferably 10% by mass or less, much more preferably 8% by mass or less.

The proportion of the total of the (meth)acrylic monomer units, at least one selected from the group consisting of the glutaric anhydride units, the glutarimide units, the N-substituted maleimide units, and the lactone ring units, and the aromatic vinyl monomer units blended when needed, in the acrylic resin (A) is preferably 85% by mass or more, more preferably 90% by mass or more, much more preferably 93% by mass or more, even more preferably 95% by mass or more, still more preferably 99% by mass or more, in 100% by mass of the acrylic resin (A). By setting the proportion to the above lower limit or more, the effects of the present invention tend to be more effectively exhibited. The upper limit of the proportion of the total of the (meth)acrylic monomer units, at least one selected from the group consisting of the glutaric anhydride units, the glutarimide units, the N-substituted maleimide units, and the lactone ring units, and the aromatic vinyl monomer units blended when needed, in the acrylic resin (A) is 100% by mass.

In the present embodiment, the acrylic resin (A) may contain only one type of the (meth)acrylic monomer units, or may contain two or more types thereof. Further, the acrylic resin (A) may contain only one type of any units selected from the group consisting of the glutaric anhydride units, the glutarimide units, the N-substituted maleimide units, and the lactone ring units, or may contain two or more types thereof. For example, an embodiment wherein two or more N-substituted maleimide units are contained can be given as an example.

When two or more of these components are contained, the total amount thereof preferably falls within the above range.

The acrylic resin (A) contains (meth)acrylic monomer units. Since the (meth)acrylic monomer units are contained, the pencil hardness of the resulting plate-shaped molded article tends to be improved.

The (meth)acrylic monomer is not particularly specified as long as it contains a (meth)acrylic group, but preferable is a compound represented by the formula (a1). 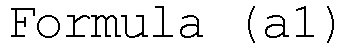 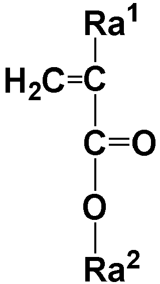 wherein Ra¹ is a hydrogen atom or a methyl group, and Ra² is an aliphatic group.

In the formula (a1), Ra¹ is a hydrogen atom or a methyl group, and is preferably a methyl group. Ra² is an aliphatic group, preferably a straight-chain or branched aliphatic group, more preferably a straight-chain aliphatic group. Examples of the aliphatic groups include alkyl groups (including cycloalkyl groups), alkynyl groups (including cycloalkynyl groups), and alkenyl groups (including cycloalkenyl groups), and preferable are alkyl groups, more preferable are straight-chain or branched alkyl groups, and much more preferable are straight-chain alkyl groups. The number of carbon atoms of the aliphatic group that is Ra² is preferably 1 to 10, more preferably 1 to **5,** much more preferably 1 **to 3,** even more preferably 1 or **2,** still more preferably **1.**

The (meth)acrylate represented by the formula (a1) is preferably an alkyl (meth)acrylate (preferably an alkyl methacrylate), more preferably methyl (meth)acrylate (preferably methyl methacrylate). By using methyl methacrylate, the impact strength and the pencil hardness of the resulting plate-shaped molded article tend to be improved.

The acrylic resin (A) contains at least one selected from the group consisting of glutaric anhydride units, glutarimide units, N-substituted maleimide units, and lactone ring units, preferably contains glutarimide units and/or N-substituted maleimide units, and more preferably contains N-substituted maleimide units. Since the glutarimide units and/or the **N-**substituted maleimide units are contained, (the heat resistance tends to be further improved.

The glutaric anhydride unit in the acrylic resin (A) is a unit having a glutaric anhydride structure, and a unit represented by the formula (a2) is preferable. 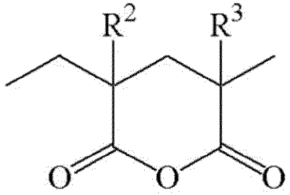 wherein R² represents a hydrogen atom or a methyl group, and R³ represents a hydrogen atom or a methyl group.

The glutarimide unit in the acrylic resin (A) is a unit having a glutaric anhydride structure, and preferable is a unit represented by the formula (a3). 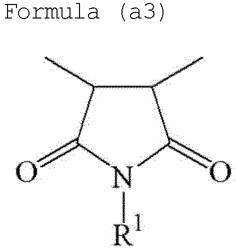 wherein R¹ is a hydrogen atom or a substituent.

The substituent is preferably a hydrocarbon group having 1 to 20 carbon atoms, more preferably an alkyl group such as a methyl group or an ethyl group, a cycloalkyl group such as a cyclohexyl group, an aryl group such as a phenyl group, or an aralkyl group such as a benzyl group.

The lactone ring unit in the acrylic resin (A) is preferably a unit represented by the formula (a4). 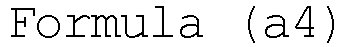 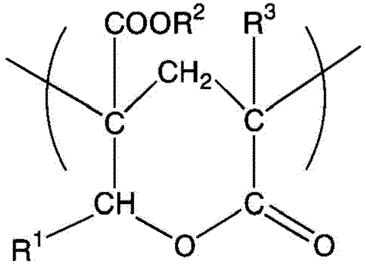 wherein R¹, R² and R³ each independently represent a hydrogen atom or an organic group having 1 to 20 carbon atoms. The organic group may contain an oxygen atom.

The organic group is preferably a hydrocarbon group having 1 to 20 carbon atoms, more preferably an alkyl group such as a methyl group or an ethyl group, a cycloalkyl group such as a cyclohexyl group, an aryl group such as a phenyl group, or an aralkyl group such as a benzyl group.

Examples of the N-substituted maleimide units in the acrylic resin (A) include N-phenylmaleimide units, N-cyclohexylmaleimide units, N-benzylmaleimide units, and N-(4-carboxyphenyl)maleimide) monomer units, and preferable are N-phenylmaleimide units and/or N-cyclohexyl maleimide units. Since N-substituted maleimide units, particularly N-phenylmaleimide units, and/or N-cyclohexylmaleimide units are contained, moreover, since both of N-phenylmaleimide units and N-cyclohexylmaleimide units are contained, the heat resistance and the compatibility with the aromatic vinyl resin (B) are more effectively exhibited.

The glass transition temperature (Tg) of the acrylic resin (A) is preferably 120°C or higher, more preferably 125°C or higher, much more preferably 127°C or higher, even more preferably 130°C or higher. By setting the glass transition temperature to the above lower limit or higher, the effects of preventing occurrence of cracking during hot bending forming tend to be further improved. The glass transition onset temperature (T) of the acrylic resin (A) is preferably 170°C or lower, more preferably 160°C or lower, much more preferably 150°C or lower, or may be 140°C or lower. By setting the glass transition temperature to the above upper limit or lower, the effects of suppressing springback during hot bending forming tend to be further improved.

When the resin composition of the present embodiment contains two or more acrylic resins (A), the glass transition onset temperature (Tg) of the acrylic resin (A) is Tg of the mixture. The measurement method for the glass transition temperature is in accordance with the method described in Examples described later (hereinafter, the same shall apply to the weight average molecular weight, the pencil hardness, and the glass transition temperature, the weight average molecular weight, and the pencil hardness of the aromatic vinyl resin (B)).

The weight average molecular weight of the acrylic resin (A) is preferably 50,000 or more, more preferably 70,000 or more, much more preferably 100,000 or more, or may be 150,000 or more. By setting the weight average molecular weight to the above lower limit or more, the impact strength of the resulting plate-shaped molded article can be further improved. The weight average molecular weight of the acrylic resin (A) is preferably 300,000 or less, more preferably 250,000 or less, much more preferably 225,000 or less, even more preferably 210,000 or less, still more preferably 200,000 or less. By setting the weight average molecular weight to the above upper limit or less, the melt viscosity of the resin composition can be effectively decreased.

The pencil hardness of the acrylic resin (A) is preferably HB or higher, more preferably F or higher, much more preferably H or higher. By setting the pencil hardness to the above lower limit or higher, the surface hardness of the resulting plate-shaped molded article can be further increased. The pencil hardness of the acrylic resin (A) is preferably 2H or lower, more preferably H or lower.

### <Aromatic vinyl resin (B)>

In the present embodiment, the aromatic vinyl resin (B) contains 55 to 93% by mass of aromatic vinyl monomer units and 7 to 45% by mass of N-substituted maleimide units. By using such a resin, the compatibility with the acrylic resin (A) tends to be further improved.

The proportion of the aromatic vinyl monomer (preferably styrene) units in the aromatic vinyl resin (B) is preferably 57% by mass or more, more preferably 60% by mass or more, much more preferably 61% by mass or more, even more preferably 64% by mass or more, still more preferably 67% by mass or more. The proportion of the aromatic vinyl monomer units in the aromatic vinyl resin (B) is preferably 90% by mass or less, more preferably 85% by mass or less, much more preferably 81% by mass or less, even more preferably 75% by mass or less, still more preferably 72% by mass or less. By setting the proportion to the above lower limit or more and to the above upper limit or less, the aromatic vinyl resin (B) is compatible with the acrylic resin (A), and a resin composition having excellent transparency tends to be obtained.

The proportion of the N-substituted maleimide monomer (preferably N-substituted phenylmaleimide) units in the aromatic vinyl resin (B) is preferably 9% by mass or more, more preferably 10% by mass or more, much more preferably 12% by mass or more, even more preferably 15% by mass or more, still more preferably 17% by mass or more. By setting the proportion to the above lower limit or more, the heat resistance tends to be improved. The proportion of the maleimide units in the aromatic vinyl resin (B) is preferably 40% by mass or less, more preferably 35% by mass or less, much more preferably 30% by mass or less, even more preferably 25% by mass or less, still more preferably less than 25% by mass, still much more preferably 24% by mass or less, particularly preferably 20% by mass or less. By setting the proportion to the above upper limit or less, the aromatic vinyl resin (B) is compatible with the acrylic resin (A), and a resin composition having excellent transparency tends to be obtained.

When the aromatic vinyl resin (B) contains cyclic acid anhydride (preferably maleic anhydride) units, the proportion thereof is preferably 10% by mass or more. By setting the proportion to the above lower limit or more, the heat resistance tends to be improved. The proportion of maleimide units in the aromatic vinyl resin (B) is preferably 36% by mass or less, more preferably 30% by mass or less, much more preferably 25% by mass or less, even more preferably 20% by mass or less, still more preferably 15% by mass or less. By setting the proportion to the above upper limit or less, the aromatic vinyl resin (B) is compatible with the acrylic resin (A), and a resin composition having excellent transparency tends to be obtained.

The proportion of the total of the aromatic vinyl monomer units, 9 to 35% by mass of the N-substituted maleimide units, and the cyclic acid anhydride units optionally contained, in the aromatic vinyl resin (B) is preferably 85% by mass or more, more preferably 90% by mass or more, much more preferably 93% by mass or more, even more preferably 95% by mass or more, still more preferably 99% by mass or more, in 100% by mass of the aromatic vinyl resin (B). By setting the proportion to the above lower limit or more, the effects of the present invention tend to be more effectively exhibited. In the aromatic vinyl resin (B), the upper limit of the proportion of the total of the aromatic vinyl monomer units, the N-substituted maleimide units, and the cyclic acid anhydride units optionally contained is 100% by mass.

In the present embodiment, the aromatic vinyl resin (B) may contain only one type of each of the aromatic vinyl monomer units and the N-substituted maleimide units, or may contain two or more types thereof. When two or more types thereof are contained, the total amount thereof preferably falls within the above range.

When the aromatic vinyl resin (B) contains cyclic acid anhydride units in the present embodiment, it may contain only one type of the cyclic acid anhydride units, or may contain two or more types thereof. When two or more types thereof are contained, the total amount thereof preferably falls within the above range.

The aromatic vinyl monomer in the aromatic vinyl resin (B) is a compound having a vinyl group and an aromatic ring group, and compounds copolymerizable with a (meth)acrylate can be widely adopted. The aromatic vinyl monomer is preferably a compound represented by CH₂=CH-L¹-Ar¹. In this regard, L¹ is a single bond or a divalent linking group, preferably a single bond or a divalent linking group having a formula weight of 100 to 500, more preferably a single bond or a divalent linking group having a formula weight of 100 to 300, much more preferably a single bond. When L¹ is a divalent linking group, it is preferably an aliphatic hydrocarbon group or a group composed of a combination of an aliphatic hydrocarbon group and **-O-.** In this regard, the formula weight means a mass (g) per mole of a portion corresponding to L¹ of the aromatic vinyl monomer. Hereinafter, other "formula weights" are considered in the same way. Ar¹ is an aromatic ring group, preferably a substituted or unsubstituted benzene ring group or naphthalene ring (preferably benzene ring), more preferably an unsubstituted benzene ring group.

More specifically, the aromatic vinyl monomers preferably include aromatic vinyl monomers represented by the formula (b1). 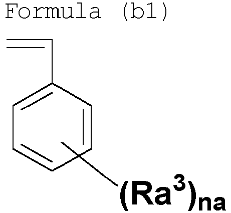 wherein Ra³ is a substituent, and na is an integer of 0 to 6.

In the formula (b1), Ra³ is a substituent, and examples thereof include a halogen atom (preferably a chlorine atom, a fluorine atom, or a bromine atom), a hydroxy group, an alkyl group (preferably an alkyl group having 1 to 5 carbon atoms), an aryl group (preferably a phenyl group), an alkenyl group (preferably an alkenyl group having 2 to 5 carbon atoms), an alkoxy group (preferably an alkoxy group having 1 to 5 carbon atoms), and an aryloxy group (preferably an phenoxy group). When na is 2 or more, a plurality of Ra³s may be the same as or different from each other.

na is preferably an integer of 5 or less, more preferably an integer of 4 or less, much more preferably an integer of 3 or less, even more preferably an integer of 2 or less, still more preferably an integer of 1 or less, still much more preferably 0.

The aromatic vinyl monomer is preferably a compound having a molecular weight of 104 to 600, more preferably a compound having a molecular weight of 104 to 400, much more preferably 104 to 200.

Specific examples of the aromatic vinyl monomers include styrene-based monomers (styrene derivatives), such as styrene, α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorosytrene, and tribromostyrene, and styrene is particularly preferable.

Examples of the N-substituted maleimide units in the aromatic vinyl resin (B) include N-phenylmaleimide units, N-cyclohexylmaleimide units, N-benzylmaleimide units, and N-(4-carboxyphenyl)maleimide) units, preferable are N-phenylmaleimide units and/or N-cyclohexylmaleimide units, and more preferable are N-phenylmaleimide units. By using such a resin, the refractive index is improved, and in a multilayer with a polycarbonate, an uneven iridescent pattern caused by difference in refractive index tends to be prevented.

Examples of the cyclic acid anhydride units in the aromatic vinyl resin (B) include maleic anhydride units and glutaric anhydride units, and preferable are maleic anhydride units. Since the aromatic vinyl resin contains cyclic acid anhydride units, particularly maleic acid units, the effects of improving compatibility with the acrylic resin (A) and the effects of improving heat resistance are more effectively exhibited.

In the present embodiment, the aromatic vinyl resin (B) preferably contains 55 to 81% by mass of the aromatic vinyl monomer units, 9 to 35% by mass of the N-substituted maleimide units, and 10 to 36% by mass of the cyclic acid anhydride units, and more preferably contains 55 to 81% by mass of styrene units, 9 to 35% by mass of N-substituted phenylmaleimide units, and 10 to 36% by mass of maleic anhydride units.

The glass transition temperature (Tg) of the aromatic vinyl resin (B) is preferably 150°C or higher, more preferably 155°C or higher, much more preferably 160°C or higher, even more preferably 165°C or higher, still more preferably 168°C or higher. By setting the glass transition temperature to the above lower limit or higher, cracking during hot bending forming tends to be suppressed. The glass transition temperature (Tg) of the aromatic vinyl resin (B) is preferably 200°C or lower, more preferably 195°C or lower, much more preferably 190°C or lower, or may be 185°C or lower, 180°C or lower, or 175°C or lower. By setting the glass transition temperature to the above upper limit or lower, the effects of suppressing springback during hot bending forming tend to be further improved.

The weight average molecular weight of the aromatic vinyl resin (B) is preferably 50,000 or more, more preferably 60,000 or more, much more preferably 70,000 or more. By setting the weight average molecular weight to the above lower limit or more, the impact strength of the resulting plate-shaped molded article can be further improved. The weight average molecular weight of the aromatic vinyl resin (B) is preferably 200,000 or less, more preferably 180,000 or less, much more preferably 150,000 or less, even more preferably 130,000 or less, still more preferably 110,000 or less, or may be 100,000 or less. By setting the glass transition temperature to the above upper limit or less, the melt viscosity of the resin composition can be effectively decreased.

The pencil hardness of the aromatic vinyl resin (B) is preferably B or higher, more preferably HB or higher. By setting the pencil hardness to the above lower limit or higher, the surface hardness of the resulting plate-shaped molded article can be further increased. The pencil hardness of the aromatic vinyl resin (B) is preferably H or lower, more preferably HB or lower.

### <Blend form of acrylic resin (A) and aromatic vinyl resin (B) >

The resin composition of the present embodiment contains 30 to 85 parts by mass of the acrylic resin (A) and 15 to 70 parts by mass of the aromatic vinyl resin (B).

In the present embodiment, the proportion of the acrylic resin (A) is usually 30 parts by mass or more, more preferably 35 parts by mass or more, much more preferably 40 parts by mass or more, even more preferably 45 parts by mass or more, still more preferably 51 parts by mass or more, still much more preferably 56 parts by mass or more, based on 100 parts by mass of the total of the acrylic resin (A) and the aromatic vinyl resin (B). By setting the proportion to the above lower limit or more, the pencil hardness and the toughness tend to be improved. The proportion of the acrylic resin (A) is usually 85 parts by mass or less, more preferably 80 parts by mass or less, much more preferably 76 parts by mass or less, even more preferably 74 parts by mass or less, still more preferably 70 parts by mass or less, based on 100 parts by mass of the total of the acrylic resin (A) and the aromatic vinyl resin (B). By setting the proportion to the above upper limit or less, the heat resistance tends to be improved.

The resin composition of the present embodiment may contain only one of each of the acrylic resin (A) and the aromatic vinyl resin (B), or may contain two or more thereof. When two or more thereof are contained, the total amount thereof preferably falls within the above range.

In the resin composition of the present embodiment, the total content of the acrylic resin (A) and the aromatic vinyl resin (B) preferably occupies 85% by mass or more, more preferably occupies 90% by mass or more, much more preferably occupies 95% by mass or more, even more preferably occupies 97% by mass or more, still more preferably occupies 99% by mass or more, of the resin composition. By setting the proportion to the above lower limit or more, the effects of the present invention tend to be more effectively exhibited. The upper limit of the total content of the acrylic resin (A) and the aromatic vinyl resin (B) in the resin composition is 100% by mass.

The content of the N-substituted maleimide units based on the total amount of the resin composition of the present embodiment is preferably more than 10% by mass, preferably 11% by mass or more, more preferably 12% by mass or more, and is preferably 35% by mass or less. By setting the content to the above lower limit or more, there is a tendency (for the heat resistance to be improved). By setting the content to the above upper limit or less, yellowness of a plate-shaped molded article formed from the resin composition tends to be reduced.

The content of the N-substituted maleimide units based on the total amount of the acrylic resin (A) and the aromatic vinyl resin (B) contained in the resin composition of the present embodiment is preferably more than 10% by mass, preferably 11% by mass or more, more preferably 12% by mass or more, and is preferably 35% by mass or less. By setting the content to the above lower limit or more, (the heat resistance tends to be improved. By setting the content to the above upper limit or less, (the yellowness tends to be reduced.

### <Antioxidant>

The resin composition of the present embodiment preferably contains an antioxidant.

Examples of the antioxidants include a phenol-based antioxidant, an amine-based antioxidant, a phosphorus-based antioxidant, and a thioether-based antioxidant. Among these, a phosphorus-based antioxidant and a phenol-based antioxidant (more preferably a hindered phenol-based antioxidant) are preferable. The phosphorus-based antioxidant is particularly preferable because the hue of the resin composition or the plate-shaped molded article is excellent.

The phosphorus-based antioxidant is preferably a phosphite-based antioxidant, and a phosphite compound represented by the following formula (1) or (2) is preferable. 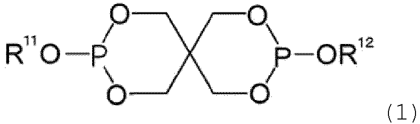 wherein R¹¹ and R¹² each independently represent an alkyl group having 1 to 30 carbon atoms or an aryl group having 6 to 30 carbon atoms. 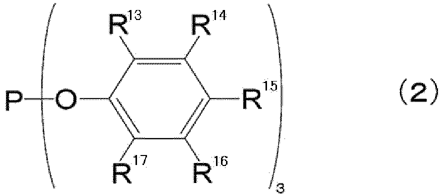 wherein R¹³ to R¹⁷ each independently represent a hydrogen atom, an aryl group having 6 to 20 carbon atoms, or an alkyl group having 1 to 20 carbon atoms.

In the formula (1), the alkyl groups represented by R¹¹ and R¹² are each independently preferably a straight-chain or branched alkyl group having 1 to 10 carbon atoms. When R¹¹ and R¹² are aryl groups, they are each preferably an aryl group represented by any of the following formulae (1-a), (1-b), and (1-c). In the formulae, * represents a linkage position.

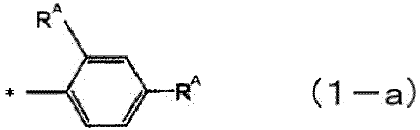

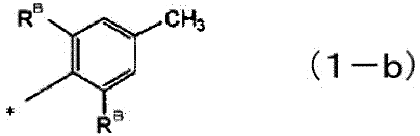

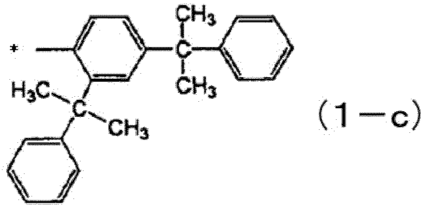

In the formula (1-a), R^{A}s each independently represent an alkyl group having 1 to 10 carbon atoms. In the formula (1-b), R^{B}s each independently represent an alkyl group having 1 to 10 carbon atoms.

Regarding the hindered phenol-based antioxidant, the description in paragraph 0063 of Japanese Patent Laid-Open No. 2018-090677 and the description in paragraph 0076 of Japanese Patent Laid-Open No. 2018-188496 can be referred to, the contents of which are incorporated herein.

Regarding the antioxidant, in addition to the above, the description in paragraphs 0057 to 0061 of Japanese Patent Laid-Open No. 2017-031313 can be considered, the contents of which are incorporated herein.

The content of the antioxidant is preferably 0.001 part by mass or more, more preferably 0.008 part by mass or more, based on 100 parts by mass of the resin composition. The upper limit of the content of the antioxidant is preferably 0.5 part by mass or less, more preferably 0.3 part by mass or less, much more preferably 0.2 part by mass or less, even more preferably 0.15 part by mass or less, still more preferably 0.10 part by mass or less, particularly preferably 0.08 part by mass or less, based on 100 parts by mass of the resin composition.

By setting the content of the antioxidant to the above lower limit or more, a plate-shaped molded article having better hue and heat discoloration resistance can be obtained. By setting the content of the antioxidant to the above upper limit or less, a plate-shaped molded article having good wet heat stability can be obtained without deteriorating heat discoloration resistance.

The antioxidant may be used singly, or may be used in combination of two or more. When two or more are used, the total amount thereof preferably falls within the above range.

### <Mold release agent>

The resin composition of the present embodiment preferably contains a mold release agent.

Since the mold release agent is contained, formability of the plate-shaped molded article can be improved.

The type of the mold release agent is not particularly specified, but examples thereof include an aliphatic carboxylic acid, an ester of an aliphatic carboxylic acid and an alcohol, an aliphatic hydrocarbon compound having a number average molecular weight of 200 to 15,000, a polyether having a number average molecular weight of 100 to 5,000, and a polysiloxane-based silicone oil.

Regarding the details of the mold release agent, the description in paragraphs 0035 to 0039 of International Publication No. 2015/190162 can be considered, the contents of which are incorporated herein.

The content of the mold release agent is preferably 0.001 part by mass or more, more preferably 0.005 part by mass or more, much more preferably 0.01 part by mass or more, based on 100 parts by mass of the resin composition. The upper limit is preferably 0.5 part by mass or less, more preferably 0.3 part by mass or less, much more preferably 0.2 part by mass or less.

The mold release agents may be used singly, or may be used in combination of two or more. When two or more are used, the total amount thereof preferably falls within the above range.

In particular, the resin composition of the present embodiment preferably contains the antioxidant and/or the mold release agent in the total amount of 0.001 to 0.5 part by mass based on 100 parts by mass of the resin composition.

### <Other components>

The resin composition of the present embodiment may contain, in addition to the above components, a thermoplastic resin other than the above, an ultraviolet absorbent, a heat stabilizer, a flame retardant, a flame retardant promoter, a colorant (also including a Plust Blue 8520 bluing agent), an antistatic agent, a fluorescent brightener, an antifogging agent, a flow modifier, an plasticizer, a dispersant, an antibacterial agent, an anti-blocking agent, an impact modifier, a sliding modifier, a hue improver, an acid trapping agent, and the like. These components may be used singly, or may be used in combination of two or more.

When the above components are contained, the total content is preferably 0.001 to 5% by mass, more preferably 0.1 to 5% by mass, of the resin composition.

### <Physical properties of resin composition>

The resin composition of the present embodiment preferably has excellent transparency. Specifically, when the resin composition of the present embodiment is molded to have a thickness of 3 mm, the haze thereof is preferably 5.0% or less, more preferably 2.0% or less, much more preferably 1.0% or less, even more preferably 0.4% or less. The lower limit is ideally 0%, but practically 0.01% or more.

The haze is measured in accordance with the description in Examples described later.

The glass transition temperature (Tg) of the resin composition of the present embodiment, as measured by differential scanning calorimetry, is preferably high. Specifically, the glass transition temperature (Tg) of the resin composition of the present embodiment is preferably 135°C or higher, more preferably 140°C or higher, much more preferably 142°C or higher, even more preferably 145°C or higher, still more preferably 147°C or higher. By setting the glass transition temperature to the above lower limit or higher, occurrence of cracking can be effectively suppressed. Even if the upper limit of the glass transition temperature (Tg) due to the differential scanning calorimetry is, for example, 165°C or lower, the required performance is fully satisfied.

The glass transition temperature (Tg) is measured in accordance with the method described in Examples described later.

For increasing the grass transition temperature (Tg), adjustment of starting material monomers of the resin can be given as an example. Alternatively, an increase in the molecular weight of the resin can be also given.

The pencil hardness of the resin composition of the present embodiment is preferably high (hard). Specifically, the pencil hardness, as determined by molding the resin composition of the present embodiment into a thickness of 1 mm and measuring pencil hardness using a pencil hardness tester under a load of 750 g in accordance with JIS K5600-5-4:1999, is preferably F or higher, more preferably H or higher. By setting the pencil hardness to F or higher, the hardness of the whole of the multilayered article can be increased, and scratch resistance can be improved. The upper limit is not particularly specified, but is practically 3H or lower.

The pencil hardness is measured in accordance with the description in Examples described later.

### <Plate-shaped molded article>

The resin composition of the present embodiment is preferably used by being processed into a plate-shaped molded article. That is to say, the plate-shaped molded article of the present embodiment is formed from the resin composition of the present embodiment. The plate-shaped molded article of the present embodiment has excellent transparency and is effectively inhibited from warpage after the wet heat test.

Examples of the plate-shaped molded articles include a plate, a film, and a sheet. As detailed later, the plate-shaped molded article may be included in a multilayered article wherein it is laminated on another base material or the like. After the plate-shaped molded article of the present embodiment is included in a multilayered article as part thereof, the multilayered article may be subjected to bending or the like.

The lower limit of the thickness of the plate-shaped molded article is, for example, 1 µm or more, preferably 10 µm or more, more preferably 20 µm or more, much more preferably 30 µm or more, even more preferably 40 µm or more, or may be 50 µm or more. By setting the thickness to the above lower limit or more, forming becomes easier, and the hardness tends to be improved. The upper limit of the thickness of the plate-shaped molded article is not particularly limited, but the thickness is preferably 500 µm or less, more preferably 300 µm or less, much more preferably 200 µm or less, even more preferably 100 µm or less, still more preferably 80 µm or less. As detailed later, the thickness of the plate-shaped molded article is preferably thin relative to the total thickness of the plate-shaped molded article and a polycarbonate resin layer. By taking such constitution, occurrence of cracking is effectively suppressed, occurrence of springback is effectively suppressed, and in addition, warping after the wet heat test is also suppressed, even if the multilayered article is thermoformed.

The plate-shaped molded article of the present embodiment is formed by injection molding, extrusion molding using a T-die, or the like.

### <Multilayered article>

The multilayered article of the present embodiment includes the plate-shaped molded article of the present embodiment and at least one other layer. Such a multilayered article is excellent in surface hardness. In the present embodiment, the at least other layer is preferably a layer containing a polycarbonate resin (polycarbonate resin layer). The polycarbonate resin layer usually plays the role of a base material of a multilayered article.

The multilayered article of the present embodiment preferably further includes a hard coat layer. The hard coat layer is preferably provided on at least a surface of the plate-shaped molded article of the present embodiment. The hard coat layer is more preferably laminated in the order of the layer containing a polycarbonate resin, the plate-shaped molded article, and the hard coat layer. The hard coat layer may be provided also on the polycarbonate resin layer side. The multilayered article may have other layers between the polycarbonate resin layer and the plate-shaped molded article and between the plate-shaped molded article and the hard coat layer, without departing from the spirit of the present embodiment.

Figure 1 is a schematic diagram showing an example of the multilayered article of the present embodiment, and 1 designates a multilayered article, 2 designates a base material (polycarbonate resin layer), 3 designates a plate-shaped molded article, and 4 designates a hard coat layer. In the present embodiment, the multilayered article may have other layers without departing from the spirit of the present embodiment. Specific examples of the other layers include an adhesion bonding layer, an adhesive layer, and an anti-fouling layer.

The multilayered article of the present embodiment also preferably further has a low refractive index layer that is on the hard coat layer and on the surface opposite the base material (the polycarbonate resin layer). That is to say, the multilayered article can be used as an anti-reflection film.

In the multilayered article of the present embodiment, one or both surfaces of the multilayered article have been preferably subjected to one or more of anti-fingerprint treatment, anti-reflection treatment, anti-glare treatment, weather resistant treatment, antistatic treatment, anti-fouling treatment, and anti-blocking treatment. In this case, an example of the outermost layer of the multilayered article is a hard coat layer. The anti-blocking treatment refers to treatment by which even films that have been brought into close contact with each other can be easily peeled off from each other, and examples of such treatment include addition of an anti-blocking agent and provision of asperities on the surface of the multilayered article.

Next, the base material 1 will be described.

The type of the base material 1 is not particularly specified, and a known base material can be adopted as long as it satisfies performance required for the multilayered article of the present embodiment. Specifically, a resin base material is preferable; a polyolefin resin, a polyester resin, a polycarbonate resin, an acrylic resin, and a polystyrene resin are more preferable; and a polycarbonate resin is much more preferably contained. These resins may be used singly, or may constitute a composite base material of two or more. In the multilayered article of the present embodiment, the base material 1 is preferably a layer containing a polycarbonate resin (polycarbonate resin layer), as previously described. The proportion of the polycarbonate resin in the polycarbonate resin layer is preferably 80% by mass or more, more preferably 90% by mass or more, much more preferably 95% by mass or more.

The polycarbonate resin is not particularly limited as long as it contains, in a molecular main chain, a -[O-R-OCO]-constitutional unit (R is a hydrocarbon group (for example, one containing an aliphatic group, an aromatic group, or both of an aliphatic group and an aromatic group, or one further having a straight-chain structure or a branched structure)) containing a carbonic acid ester bond, and various polycarbonate resins can be used.

In the present embodiment, the polycarbonate resin preferably contains a bisphenol polycarbonate resin. The bisphenol polycarbonate resin refers to a resin in which 80% by mol or more, preferably 90% by mol or more, more preferably 95% by mol or more, of the constitutional units to constitute the polycarbonate resin are carbonate constitutional units derived from bisphenol (preferably bisphenol A) and/or derivatives thereof.

The bisphenol polycarbonate resin is preferably a bisphenol A polycarbonate resin.

The molecular weight of the polycarbonate resin is not particularly specified, but the weight average molecular weight is preferably 20,000 or more, more preferably 30,000 or more. The weight average molecular weight is preferably 100,000 or less, more preferably 70,000 or less. By setting the weight average molecular weight to the above lower limit or more, the strength of the resulting plate-shaped molded article can be increased. By setting the weight average molecular weight to the above upper limit or less, the formability tends to be improved.

In the present embodiment, two or more polycarbonate resins different in weight average molecular weight may be mixed and used, and in this case, the weight average molecular weight is a weight average molecular weight of the mixture.

The weight average molecular weight of the polycarbonate resin is measured in accordance with the description in Examples described later.

The glass transition temperature (Tg) of the polycarbonate resin for use in the present embodiment is preferably 160°C or lower, more preferably 155°C or lower, much more preferably 154°C or lower, even more preferably 153°C or lower, still more preferably 152°C or lower, still much more preferably 151°C or lower. The glass transition temperature (Tg) of the polycarbonate resin for use in the present embodiment is, for example, 140°C or higher, or may be 143°C or higher, 145°C or higher, 147°C or higher, 148°C or higher.

The glass transition temperature is measured in accordance with the description in paragraph 0056 of Japanese Patent Laid-Open No. 2022-080270.

In addition, regarding details of the polycarbonate resin, the description in paragraphs 0011 to 0020 of Japanese Patent Laid-Open No. 2012-144604 and the description in paragraphs 0014 to 0035 of Japanese Patent Laid-Open No. 2019-002023 can be considered without departing from the spirit of the present embodiment, the contents of which are incorporated herein.

The base material 1 may contain various resin additives when needed, as long as desired physical properties are not significantly impaired. Examples of the resin additives include an antioxidant, a mold release agent, a flame retardant, an anti-dripping agent, a dye and a pigment (including carbon black), an antistatic agent, an antifogging agent, an anti-blocking agent, a flow modifier, a plasticizer, a dispersant, and an antibacterial agent. The resin additives may be contained singly, or may be contained in any combination of two or more at any ratio.

The base material 1 may be single-layered, or may be multilayered.

The thickness of the base material 1 (preferably polycarbonate resin layer) is not particularly limited, but is, for example, 1 µm or more, preferably 30 µm or more, more preferably 35 µm or more, much more preferably 40 µm or more, even more preferably 50 µm or more, still more preferably 100 µm or more, still much more preferably 300 µm or more, particularly preferably 500 µm or more, or may be 700 µm or more. The thickness of the base material 1 is preferably 10,000 µm or less, more preferably 5,000 µm or less, or may be 3,000 µm or less, or 2,500 µm or less.

The multilayered article of the present embodiment preferably includes the plate-shaped molded article and the base material, as described above, and in this case, the relationship between thicknesses of the plate-shaped molded article and the base material (preferably polycarbonate resin layer) preferably satisfies thickness of plate-shaped molded article/[total thickness of plate-shaped molded article and base material]<1/5. Since this relationship is satisfied, the plate-shaped molded article and the whole of the multilayered article become thin, so that even if the multilayered article is thermoformed, occurrence of cracking is more effectively suppressed, and occurrence of springback is more effectively suppressed. More specifically, in order to suppress springback, it is more effective to relax the residual stress for bending that remains in the whole of the multilayered article when the multilayered article is bent. From such a viewpoint, it is more preferable to relax the residual stress of not only the base material but also the plate-shaped molded article. By making the plate-shaped molded article and the base material satisfy the above relationship, the residual stress derived from the plate-shaped molded article is apt to be relaxed, and the springback can be suppressed more effectively. In the present embodiment, thickness of plate-shaped molded article/[total thickness of plate-shaped molded article and base material]<1/6 is more preferable, and thickness of plate-shaped molded article/[total thickness of plate-shaped molded article and base material]<1/8 is much more preferable. Furthermore, 1/35<thickness of plate-shaped molded article/[total thickness of plate-shaped molded article and base material] is preferable, and 1/25<thickness of plate-shaped molded article/[total thickness of plate-shaped molded article and base material] is more preferable. Especially in the present embodiment, it is more preferable that the above relationship is satisfied while the plate-shaped molded article and the base material satisfy the above-mentioned prescribed preferred thickness range, and while the multilayered article satisfies the preferred thickness range described later. By taking such constitution, the effects of the present invention are more effectively achieved.

In the present embodiment, the amount of change of warpage (absolute value) of the multilayered article composed of the plate-shaped molded article (acrylic resin layer) and the polycarbonate resin layer after the multilayered article is allowed to stand still for 120 hours in an environment of a temperature of 85°C and a relative humidity of 85% is more preferably less than 250 µm. The lower limit of the amount of change of warpage is ideally 0 µm, but is practically 1 µm or more.

The amount of change of warpage is measured in accordance with the description in Examples described later.

Next, details of the hard coat layer will be described. The hard coat layer that may be included in the multilayered article of the present embodiment is a layer having a higher surface hardness than the base material (for example, polycarbonate resin layer). Since such a hard coat layer is included, the surface hardness of the multilayered article or a formed article can be enhanced.

The thickness of the hard coat layer is preferably 0.5 µm or more, more preferably 1 µm or more, much more preferably 2 µm or more, even more preferably 4 µm or more, still more preferably 5 µm or more. By setting the thickness to the above lower limit or more, the pencil hardness of the whole of the multilayered article due to the hard coat layer tends to be further improved. The upper limit of the thickness of the hard coat layer is preferably 20 µm or less, more preferably 15 µm or less, much more preferably 12 µm or less, even more preferably 10 µm or less, still more preferably 8 µm or less. By setting the thickness to the upper limit or less, processability during hot bending tends to be further improved.

The hard coat layer is preferably one obtained by applying a hard coat material capable of being thermoset or cured by active energy rays, and then curing the material.

An example of a paint to be cured by using active energy rays is a resin composition composed of one or more monofunctional or polyfunctional (preferably bi- to decafunctional) (meth)acrylate monomers or oligomers, and is preferably a resin composition containing a monofunctional or polyfunctional (preferably bi- to decafunctional) urethane (meth)acrylate oligomer, or the like. To these resin compositions, a photopolymerization initiator is preferably added as a curing catalyst.

Examples of the thermosetting resin paints include polyorganosiloxane-based ones and crosslinked acrylic ones. Some of such resin compositions are commercially available as acrylic resins or hard coat agents for polycarbonate resin films or sheets, and they are appropriately selected considering suitability with the coating line.

Regarding the hard coat layer, the description in paragraphs 0045 to 0055 of Japanese Patent Laid-Open No. 2013-020130, the description in paragraphs 0073 to 0076 of Japanese Patent Laid-Open No. 2018-103518, and the description in paragraphs 0062 to 0082 of Japanese Patent Laid-Open No. 2017-213771 can be considered, the contents of which are incorporated herein.

When the multilayered article of the present embodiment has a hard coat layer, the pencil hardness as measured from the hard coat layer side and as measured in accordance with JIS K5600-5-4:1999 is preferably high. Specifically, the pencil hardness is preferably 2H or higher, more preferably 3H or higher. The upper limit is practically 6H or less, and even when the pencil hardness is 5H or less, the required performance is fully satisfied.

The total thickness of the multilayered article of the present embodiment is not particularly limited, but is preferably 10 µm or more, more preferably 20 µm or more, much more preferably 100 µm or more. When the layer thickness is larger, stiffness of the multilayered article tends to be improved. The total thickness of the multilayered article is preferably 10,000 µm or less, more preferably 5,000 µm or less, or may be 2,000 µm or less. By setting the layer thickness to such a thickness, the formability of the multilayered article can be improved because when a multilayered sheet is compression bonded between rolls to cool the resin during forming of a multilayered article, the resin is cooled to the inside of the multilayered article.

The multilayered article of the present embodiment can be formed by using a main extruder for extruding the resin composition containing a polycarbonate resin and a sub-extruder for extruding the resin composition of the present embodiment, melting the resins under the conditions for the respective resins, extruding them to lead them to a die, and laminating them to form a sheet in the die, or forming sheets and then laminating them.

Since the multilayered article of the present embodiment is excellent in hot bending resistance, it is suitable for applications with a bent part. For example, it is preferably used also for a formed article provided with a part having a curvature radius 50 mmR or less (preferably curvature radius of 40 to 50 mmR).

The formed article is preferably obtained by hot bending forming of the multilayered article of the present embodiment at 130 to 150°C (preferably 133 to 147°C). The multilayered article of the present embodiment is excellent in hot bending resistance, and therefore, it is particularly useful when it is formed into a formed article provided with a part having a curvature radius of 50 mmR or less. Furthermore, from the viewpoint of occurrence of springback or cracking, the hot bending temperature is preferably 133°C or higher, more preferably 140°C or higher. By setting the temperature to the above lower limit or higher, the hot bending time can be shortened, moreover, the stress relaxation of the resin becomes faster, and springback hardly occurs, so that such a temperature is preferable. The hot bending temperature is preferably 148°C or lower, more preferably 146°C or lower.

### <Uses>

The resin composition, the plate-shaped molded article, and the multilayered article of the present embodiment can be preferably used for formed articles, such as optical components, design products, and anti-reflection formed articles. That is to say, the formed article of the present embodiment includes the plate-shaped molded article or the multilayered article of the present embodiment.

The plate-shaped molded article and the multilayered article of the present embodiment are preferably used for display devices, electrical and electronic equipment, OA equipment, personal digital assistants, machine parts, household appliances, vehicle parts, various containers, parts of lighting equipment or the like, etc. Among these, it is particularly preferably used for housings of various displays, electrical and electronic equipment, OA equipment, personal digital assistants and household appliances, lighting equipment and vehicle parts (particularly vehicle interior parts), surface films of smartphones, touch panels and the like, optical materials, and optical disks. Especially, the formed article of the present embodiment is preferably used as a senser film of a touch panel or as an anti-reflection formed article for various displays.

### [Examples]

Hereinafter, the present invention will be more specifically described with reference to examples. The materials, the amounts used, the proportions, the processing contents, the processing procedure, etc. shown in the following examples can be appropriately modified as long as not departing from the spirit of the present invention. Therefore, the scope of the present invention is not limited to the specific examples shown below.

When measuring equipment and the like used in the examples are difficult to obtain because of product discontinuation or the like, other equipment having equivalent performance can be used for the measurement.

### <Starting materials>

(A) Acrylic resin (MMA resin)
   (A1) manufactured by NIPPONN SHOKUBAI CO., LTD., PML203, ratio by mass between styrene : N-phenylmaleimide : N-cyclohexylmaleimide : MMA (methyl methacrylate) = 6% by mass : 19% by mass : 4% by mass : 71% by mass, Tg: 135°C, weight average molecular weight: 189,000
   (A2) manufactured by Asahi Kasei Corp., SK540N, ratio by mass between N-phenylmaleimide : N-cyclohexylmaleimide : MMA (methyl methacrylate) = 8% by mass : 7% by mass : 85% by mass, Tg: 124°C, weight average molecular weight: 128,000
   (A3) manufactured by Daicel-Evonik Ltd., hw55, ratio by mass between styrene : maleic anhydride : MMA (methyl methacrylate) = 16% by mass : 8% by mass : 76% by mass, Tg: 120°C, weight average molecular weight: 109,000
   (A4) manufactured by ARKEMA GROUP, HT121, ratio by mass between MMA (methyl methacrylate) : MA (methacrylic acid) = 94% by mass : 6% by mass, Tg: 117°C, weight average molecular weight: 75,800
   (A5) manufactured by Asahi Kasei Corp., PMMA resin, DELPET 80HD, ratio by mass between MMA (methyl methacrylate) : methyl acrylate = 99% by mass : 1% by mass, Tg: 108°C, weight average molecular weight: 124,600
   (A6) manufactured by ARKEMA GROUP, PMMA resin, ALTUGLAS (registered trademark) V020, ratio by mass between MMA (methyl methacrylate) : methyl acrylate = 97% by mass : 3% by mass, Tg: 109°C, weight average molecular weight: 127,000
(B) Aromatic vinyl resin
   St-N-substituted maleimide monomer copolymer
      (B1) manufactured by Polyscope Polymers B.V., XIBOND 330, styrene : N-phenylmaleimide : maleic anhydride = 70% by mass : 19% by mass : 11% by mass, glass transition temperature (Tg): 171°C, weight average molecular weight: 99,800
      (B2) manufactured by Polyscope Polymers B.V., XIBOND 370, styrene : N-phenylmaleimide : maleic anhydride = 65% by mass : 13% by mass : 22% by mass, glass transition temperature (Tg): 170°C, weight average molecular weight: 76,800
   St-MAH copolymer
      (B3) manufactured by Polyscope Polymers B.V., XIRANSO 23110, styrene : maleic anhydride = 77% by mass : 23% by mass, glass transition temperature (Tg): 145°C, weight average molecular weight: 74,300
      (B4) manufactured by Polyscope Polymers B.V., XIRANSO 26080, styrene : maleic anhydride = 74% by mass : 26% by mass, glass transition temperature (Tg): 150°C, weight average molecular weight: 47,600
(C) Antioxidant
   (C1) ADK STAB 2112, compound described below; tBu represents a t-butyl group. 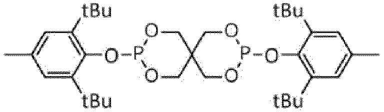
(D) Mold release agent
   (D1) Glycerol monostearate, manufactured by Riken Vitamin Co., Ltd., Rikemal S-100A
(E) Polycarbonate resin
   (E) Bisphenol A polycarbonate resin having a p-t-butylphenoxy group as an end group, manufactured by Mitsubishi Engineering-Plastics Corporation, E-2000F, weight average molecular weight: 53,000, glass transition temperature (Tg): 149°C

### <Measurement of glass transition temperature>

Regarding the glass transition temperature (Tg) of each of various resins and resin compositions, 2 cycles of each of temperature increase and temperature decrease were carried out in accordance with the following differential scanning calorimetry (DSC measurement) conditions, and a glass transition temperature during temperature increase in the second cycle was measured.

An intersection point between a straight line obtained by extending the baseline from the low-temperature side to the high-temperature side and a tangent line at the inflection point was regarded as the glass transition temperature or Tg. Measurement starting temperature was 30°C, a temperature increasing rate was 10°C/min, a reached temperature was 250°C, and a temperature decrease rate was set to 20°C/min. The unit was expressed in °C.

As the measurement device, a differential scanning calorimeter (DSC, manufactured by Hitachi High-Tech Science Corporation, "DSC7020") was used.

### <Measurement method for weight average molecular weight>

The weight average molecular weight (Mw) of each of various resins was measured by gel permeation chromatography.

Specifically, as a gel permeation chromatograph, LC-20AD system (manufactured by Shimadzu Corporation) was used, and as columns, those of LF-804 (manufactured by Shodex) were connected and used. The column temperature was set to 40°C. As a detector, an RI detector of RID-10A (manufactured by Shimadzu Corporation) was used. As an eluent, chloroform was used, and a calibration curve was made by using standard polystyrene manufactured by Tosoh Corporation.

When the above gel permeation chromatograph, columns, and detector are difficult to obtain, other equipment and the like having equivalent performance are used for the measurement.

### Examples 1 to 4, Comparative Examples 1 to 17

### <Production of resin composition (pellets of surface layer material)>

The components described above were measured so as to obtain the additive amounts described in Tables 1 to 5 (the amount of each component in Tables 1 to 5 is expressed in part(s) by mass). Thereafter, they were mixed in a tumbler for 15 minutes, then melt kneaded by a vented twin screw extruder ("TEX30α" manufactured by The Japan Steel works, Ltd.) having a screw diameter of 32 mm at a cylinder temperature of 260°C, and subjected to strand cutting to obtain pellets.

### <Pellet appearance>

The appearance of the resulting pellets was evaluated by visual observation. The evaluation was made by 5 experts, and judgement was made by majority vote.
A: The pellets were transparent.
B: The pellets were opaque.

The pellets (resin composition) evaluated as A were further subjected to the following evaluation.

### <Production of plate-shaped molded articles with thicknesses of 1 mm and 3 mm>

The resulting resin composition (pellets) was melt kneaded by a vented twin screw injection molding machine ("PE-100" manufactured by Sodick Co., Ltd., engagement type same-direction-rotating type having a twin screw diameter of 29 mm, plunger diameter: 28 mm) at a cylinder temperature of 260°C, and plate-shaped molded articles (100 × 100 × 1 mm, and 100 × 100 × 3 mm) were molded under the conditions of a mold temperature of 80°C.

### <Measurement of haze>

The haze of the plate-shaped molded article (having thickness of 3 mm) obtained above was measured under the conditions of a 10° visual field of D65 light source using a haze meter. As the haze meter, "HM-150" manufactured by Murakami Color Research Laboratory was used. The unit was expressed in %.

### <Pencil hardness>

The pencil hardness of the plate-shaped molded article (having thickness of 1 mm) obtained above was measured using a pencil hardness tester under a load of 750 g in accordance with JIS K5600-5-4:1999. Evaluation was made by 5 experts, and judgement was made by majority vote.

### <Production of multilayered article without hard coat>

Using a single screw extruder having a shaft diameter of 32 mm, a single screw extruder having a shaft diameter of 65 mm, and a multilayer extruder having a feed block connected to all the extruders and a T-die having a width of 650 mm connected to the feed block, a multilayered article was formed. Into the single screw extruder having a shat diameter of 32 mm, the resin composition for use in the formation of an acrylic resin layer (surface layer) of each of examples and comparative examples shown in Tables 1 to 5 was introduced, and it was extruded under the conditions of a cylinder temperature of 250°C and a discharge rate of 2.1 kg/h. Further, into the single screw extruder having a shaft diameter of 65 mm, a polycarbonate resin (E-2000F) was continuously introduced, and it was extruded at a cylinder temperature of 280°C depending on the resin viscosity and a discharge rate of 67.9 kg/h. The feed block connected to all the extruders had distribution pins of two types and two layers, and the compositions were extruded and laminated. By means of a T-die connected beyond that, the compositions were extruded into sheets, and the sheets were cooled while mirror surfaces were transferred thereon with three mirror finish rolls set at temperatures of 130°C, 140°C, and 180°C from the upstream side, thereby obtaining each multilayered article. The overall thickness of the center of each multilayered article obtained was 2000 µm, and the thickness of the acrylic resin layer (surface layer) was 60 µm.

### <Application of hard coat>

A paint obtained by adding 1% by mass of a photopolymerization initiator (product name: I-184 [compound name: 1-hydroxy-cyclohexyl phenyl ketone] manufactured by BASF Japan Ltd.) to the total 100 parts by mass of 60 parts by mass of a hexafunctional urethane acrylate oligomer (product name: U6HA, manufactured by Shin-Nakamura Chemical Co., Ltd.), 35 parts by mass of PEG200# diacrylate (product name: 4EG-A, manufactured by Kyoeisha Chemical Co., LTD), and 5 parts by mass of a fluorine group-, hydrophilic group-, lipophilic group- and UV reactive group-containing oligomer (product name: RS-90, manufactured by DIC Corporation) was applied to a surface of the acrylic resin layer of the multilayered article without a hard coat produced above using a bar coater, and was irradiated with a metal halide lamp (20 mW/cm²) for 5 seconds to cure the hard coat. The thickness of the hard coat layer was 6 µm.

### <Pencil hardness>

Regarding the hard coat layer side of the multilayered article provided with a hard coat layer obtained above, pencil hardness was measured using a pencil hardness tester under a load of 750 g in accordance with JIS K5600-5-4:1999. Evaluation was made by 5 experts, and judgement was made by majority vote.

### <Hot press formability (145°C, 2-minute hot bending)>

Regarding the multilayered article provided with a hard coat layer obtained above, a mold of a convex mold (male mold) and a concave mold (female mold), a curvature radius of which became 50 **mmR,** were prepared. The multilayered article had been subjected to preheating at 90°C for 1 minute before molding, and the multilayered article was placed in the mold so that the surface having been coated with a hard coat layer was on the convex side, then subjected to pressing at a mold temperature of 145°C for 2 minutes, and naturally cooled to prepare a hot press formed article.

Cracking at the bent part of the hot press formed article was evaluated by visual observation. Evaluation was made by 5 experts, and judgement was made by majority vote.
A: Cracking was not confirmed at the bent part of the hot press formed article.
B: Cracking was confirmed at the bent part of the hot press formed article.

### <Warpage evaluation under high-temperature high-humidity environment>

A test piece having a length of 10 cm and a width of 6 cm was cut out from around the center of the multilayered article without a hard coat. The test piece was set in a 2-point support holder, and introduced into an environment tester having been set at a temperature of 23°C and a relative humidity of 50%, for 24 hours or more to perform state adjustment, and thereafter, warpage was measured. The value at this time was regarded as a value of the amount of warpage before treatment. Next, the test piece was set in the holder, then introduced into an environment tester having been set at a temperature of 85°C and a relative humidity of 85%, and held for 120 hours in that state. Furthermore, the test piece with the holder was moved into an environment tester having been set at a temperature of 23°C and a relative humidity of 50%, and held for 4 hours in that state, and thereafter, warpage was measured again. The value at this time was regarded as a value of the amount of warpage after treatment. In the measurement of warpage, a three-dimensional shape measuring machine equipped with a motorized stage was used, the test piece taken out was allowed to stand still horizontally in the convex state and scanned at 1 mm intervals, and the raised area in the center part was measured as a warpage. A difference in amount of warpage between before and after treatment, namely, (amount of warpage after treatment) - (amount of warpage before treatment), was evaluated as an amount of change of warpage. At that time, a case where the acrylic resin layer side was convex was evaluated with a sign "-", and a case where the polycarbonate resin layer side was convex was evaluated with a sign "+".
A: The absolute value of the amount of change of warpage was less than 250 µm.
B: The absolute value of the amount of change of warpage was 250 µm or more.

**[Table 1]**

| | | | Example | | | |
|---|---|---|---|---|---|---|
| | Component | Abbreviation | 1 | 2 | 3 | 4 |
| | Acrylic resin (A) | A1 | 60 | 60 | | |
| | | A2 | | | 50 | 50 |
| | | A3 | | | | |
| | | A4 | | | | |
| Resin composition (surface layer material) | | A5 | | | | |
| | | A6 | | | | |
| | St-N-substituted maleimide copolymer (B) | B1 | 40 | | | 50 |
| | | B2 | | 40 | 50 | |
| | St-MAH copolymer (B) | B3 | | | | |
| | | B4 | | | | |
| | Antioxidant (C) | C1 | 0.05 | 0.05 | 0.05 | 0.05 |
| | Mold release agent (D) | D1 | 0.1 | 0.1 | 0.1 | 0.1 |
| PC (PC base material) | Polycarbonate resin (E) | E1 | A | A | A | A |
| | | | | | | |
| Physical Property evaluation | Pellet appearance | | A | A | A | A |
| | Tg | [°C] | 148 | 146 | 146 | 147 |
| | Haze | [%] | 0.1 | 0.3 | 0.2 | 0.2 |
| | Pencil hardness (1 mm piece) | | H | H | H | H |
| | Pencil hardness (multilayered sheet) | | 3H | 3H | 3H | 3H |
| | 145°C-50R-2min hot bending (cracking) | | A | A | A | A |
| | Amont of change of warpage after high temperature and high humidity | µm | -150 | -156 | -230 | -240 |
| | Warpage changeability | | A | A | A | A |

**[Table 2]**

| | | | Comparative Example | | | |
|---|---|---|---|---|---|---|
| | Component | Abbreviation | 1 | 2 | 3 | 4 |
| | Acrylic resin (A) | A1 | 100 | | | |
| | | A2 | | 100 | | |
| | | A3 | | | | |
| | | A4 | | | | |
| Resin composition (surface layer material) | | A5 | | | | |
| | | A6 | | | | |
| | St-N-substituted maleimide copolymer (B) | B1 | | | 100 | |
| | | B2 | | | | 100 |
| | St-MAH copolymer (B) | B3 | | | | |
| | | B4 | | | | |
| | Antioxidant (C) | C1 | 0.05 | 0.05 | 0.05 | 0.05 |
| | Mold release agent (D) | D1 | 0.1 | 0.1 | 0.1 | 0.1 |
| PC (PC base material) | Polycarbonate resin (E) | E1 | A | A | A | A |
| | | | | | | |
| Physical Property evaluation | Pellet appearance | | A | A | A | A |
| | Tg | [°C] | 135 | 125 | 171 | 170 |
| | Haze | [%] | 0.1 | 0.2 | 0.1 | 0.2 |
| | Pencil hardness (1 mm piece) | | 2H | 2H | B | B |
| | Pencil hardness (multilayered sheet) | | 4H | 4H | H | H |
| | 145°C-50R-2min hot bending (cracking) | | B | B | B | B |
| | Amont of change of warpage after high temperature and high humidity | µm | 720 | 750 | -620 | -641 |
| | Warpage changeability | | B | B | B | B |

**[Table 3]**

| | | | Comparative Example | | | |
|---|---|---|---|---|---|---|
| | Component | Abbreviation | 5 | 6 | 7 | 8 |
| | Acrylic resin (A) | A1 | 95 | 5 | 50 | 40 |
| | | A2 | | | | |
| | | A3 | | | | |
| | | A4 | | | | |
| Resin composition (surface layer material) | | A5 | | | | |
| | | A6 | | | | |
| | St-N-substituted maleimide copolymer (B) | B1 | 5 | 95 | | |
| | | B2 | | | | |
| | St-MAH copolymer (B) | B3 | | | 50 | 60 |
| | | B4 | | | | |
| | Antioxidant (C) | C1 | 0.05 | 0.05 | 0.05 | 0.05 |
| | Mold release agent (D) | D1 | 0.1 | 0.1 | 0.1 | 0.1 |
| PC (PC base material) | Polycarbonate resin (E) | E1 | A | A | A | A |
| | | | | | | |
| Physical Property evaluation | Pellet appearance | | A | A | A | A |
| | Tg | [°C] | 136 | 170 | 140 | 141 |
| | Haze | [%] | 0.2 | 0.2 | 0.1 | 0.1 |
| | Pencil hardness (1 mm piece) | | 2H | B | H | H |
| | Pencil hardness (multilayered sheet) | | 3H | H | 3H | 3H |
| | 145°C-50R-2min hot bending (cracking) | | B | B | B | B |
| | Amont of change of warpage after high temperature and high humidity | µm | 703 | -598 | -340 | -425 |
| | Warpage changeability | | B | B | B | B |

**[Table 4]**

| | | | Comparative Example | | | |
|---|---|---|---|---|---|---|
| | Component | Abbreviation | 9 | 10 | 11 | 12 |
| | Acrylic resin (A) | A1 | 65 | 50 | 50 | |
| | | A2 | | | | |
| | | A3 | | | | 60 |
| | | A4 | | | | |
| | | A5 | | | | |
| Resin composition (surface layer material) | | A6 | | 10 | 10 | |
| | St-N-substituted maleimide copolymer (B) | B1 | | | | 40 |
| | | B2 | | | | |
| | St-MAH copolymer (B) | B3 | | | 40 | |
| | | B4 | 35 | 40 | | |
| | Antioxidant (C) | C1 | 0.05 | 0.05 | 0.05 | 0.05 |
| | Mold release agent (D) | D1 | 0.1 | 0.1 | 0.1 | 0.1 |
| PC (PC base material) | Polycarbonate resin (E) | E1 | A | A | A | - |
| | | | | | | |
| Physical Property evaluation | Pellet appearance | | A | A | A | B |
| | Tg | [°C] | 139 | 140 | 138 | |
| | Haze | [%] | 0.1 | 0.1 | 0.1 | |
| | Pencil hardness (1 mm piece) | | H | H | H | |
| | Pencil hardness (multilayered sheet) | | 3H | 3H | 3H | |
| | 145°C-50R-2min hot bending (cracking) | | B | B | B | |
| | Amont of change of warpage after high temperature and high humidity | µm | -173 | -82 | -20 | |
| | Warpage changeability | | A | A | A | |

**[Table 5]**

| | | | Comparative Examale | | | | |
|---|---|---|---|---|---|---|---|
| | Component | Abbreviation | 13 | 14 | 15 | 16 | 17 |
| | Acrylic resin (A) | A1 | | | | | |
| | | A2 | | | | | |
| | | A3 | | | 60 | | |
| | | A4 | 60 | | | 60 | |
| | | A5 | | 60 | | | 60 |
| Resin composition (surface layer material) | | A6 | | | | | |
| | St-N-substituted maleimide copolymer (B) | B1 | 40 | 40 | | | |
| | | B2 | | | 40 | 40 | 40 |
| | St-MAH copolymer (B) | B3 | | | | | |
| | | B4 | | | | | |
| | Antioxidant (C) | C1 | 0.05 | 0.05 | 0.05 | 0.05 | 0.05 |
| | Mold release agent (D) | D1 | 0.1 | 0.1 | 0.1 | 0.1 | 0.1 |
| PC (PC base material) | Polycarbonate resin (E) | E1 | - | - | - | - | - |
| | | | | | | | |
| Physical Property evaluation | Pellet appearance | | B | B | B | B | B |
| | Tg | [°C] | | | | | |
| | Haze | [%] | | | | | |
| | Pencil hardness (1 mm piece) | | | | | | |
| | Pencil hardness (multilayered sheet) | | | | | | |
| | 145°C-50R-2min hot bending (cracking) | | | | | | |
| | Amont of change of warpage after high temperature and high humidity | µm | | | | | |
| | Warpage changeability | | | | | | |

In Tables 1 to 5 above, "A" in the column of PC (PC base material) means that a multilayered article provided with a polycarbonate resin base material (polycarbonate resin layer) was produced.

In Tables 1 to 5 above, Tg indicates a glass transition temperature of the resin composition.

As is apparent from the results above, the resin compositions of the present invention were excellent in transparency, and were able to be effectively inhibited from cracking caused by hot bending in a short time. Furthermore, a resin composition having excellent transparency was obtained. In addition, the amount of change of warpage after high temperature and humidity was also small.

### [Reference Signs List]

- 1:: multilayered article
- 2:: base material
- 3:: plate-shaped molded article
- 4:: hard coat layer

## Claims

1. A resin composition comprising 30 to 85 parts by mass of an acrylic resin (A) and 15 to 70 parts by mass of an aromatic vinyl resin (B), wherein
the acrylic resin A comprises 60 to 95% by mass of (meth)acrylic monomer units and 5 to 40% by mass in total of at least one selected from the group consisting of glutaric anhydride units, glutarimide units, N-substituted maleimide units, and lactone ring units, and
the aromatic vinyl resin (B) comprises 55 to 93% by mass of aromatic vinyl monomer units and 7 to 45% by mass of N-substituted maleimide units.

2. The resin composition according to claim 1, wherein the acrylic resin (A) comprises 5 to 40% by mass of N-substituted maleimide units.

3. The resin composition according to claim 1 or **2,** wherein the resin composition when molded to have a thickness of 3 mm has a haze of 5.0% or less.

4. The resin composition according to any one of claims 1 to 3, wherein the glass transition temperature of the resin composition is 135 to 165°C.

5. The resin composition according to any one of claims 1 to 4, wherein the aromatic vinyl resin (B) comprises 55 to 81% by mass of aromatic vinyl monomer units, 9 to 35% by mass of N-substituted maleimide units, and 10 to 36% by mass of cyclic acid anhydride units.

6. The resin composition according to any one of claims 1 to 4, wherein the aromatic vinyl resin (B) comprises 55 to 81% by mass of styrene units, 9 to 35% by mass of N-substituted phenylmaleimide units, and 10 to 36% by mass of maleic anhydride units.

7. The resin composition according to any one of claims 1 to 6, wherein the glass transition temperature of the aromatic vinyl resin (B) is 150 to 200°C.

8. The resin composition according to any one of claims 1 to 7, further comprising 0.001 to 0.5 part by mass of an antioxidant and/or a mold release agent based on 100 parts by mass of the resin composition.

9. The resin composition according to any one of claims 1 to 8, wherein the resin composition when molded to have a thickness of 1 mm has a pencil hardness, as measured in accordance with JIS K5600-5-4:1999, of F or higher.

10. The resin composition according to claim 1, wherein
the acrylic resin (A) comprises 5 to 40% by mass of N-substituted maleimide units,
the resin composition when molded to have a thickness of 3 mm has a haze of 5.0% or less,
the glass transition temperature of the resin composition is 135 to 165°C,
the aromatic vinyl resin (B) comprises 55 to 81% by mass of styrene units, 9 to 35% by mass of N-substituted phenylmaleimide units, and 10 to 36% by mass of maleic anhydride units,
the glass transition temperature of the aromatic vinyl resin (B) is 150 to 200°C,
the resin composition further comprises 0.001 to 0.5 part by mass of an antioxidant and/or a mold release agent based on 100 parts by mass of the resin composition, and
the resin composition when molded to have a thickness of 1 mm has a pencil hardness, as measured in accordance with JIS K5600-5-4:1999, of F or higher.

11. A plate-shaped molded article formed from the resin composition according to any one of claims 1 to 10.

12. The plate-shaped molded article according to claim 11, for displays.

13. A multilayered article comprising the plate-shaped molded article according to claim 11 or 12 and at least one other layer.

14. The multilayered article according to claim 13, wherein the at least one other layer is a layer comprising a polycarbonate resin.

15. The multilayered article according to claim 13 or 14, further having a hard coat layer.

16. The multilayered article according to any one of claims 13 to 15, wherein one or both surfaces of the multilayered article have been subjected to one or more of anti-fingerprint treatment, anti-reflection treatment, anti-glare treatment, weather resistant treatment, antistatic treatment, anti-fouling treatment, and anti-blocking treatment.

17. A formed article comprising the plate-shaped molded article according to claim 11 or 12.
